# EUROPEAN PATENT APPLICATION

(11) **EP 4 191 097 A1**
(43) Date of publication of application: **07.06.2023**
(21) Application number: 21851100.4
(22) Date of filing: 14.06.2021
(51) Int. Cl.: F16J 15/3204, F16J 15/3248

(54) **SEALING DEVICE**

(30) Priority: 27.07.2020 JP 2020126832
(71) Applicant: NOK Corporation, Minato-ku Tokyo 105-8585 (JP)
(72) Inventor: KAMIYA Yusuke, Fukushima-shi, Fukushima 960-1193 (JP); HAMAMOTO Kokichi, Fukushima-shi, Fukushima 960-1193 (JP)
(74) Representative: TBK
(86) International application number: PCT/JP2021/022450
(87) International publication number: WO 2022/024566

(57) **Abstract**

It is made possible to suppress conductive performance from being affected by usage conditions and usage time, suppress reduction in sealing performance, reduce sliding resistance, and further improve the conductive performance.

A sealing device (1) includes a reinforcing ring (10), an elastic body portion (20), a conductive grease (G), and a conductive fabric (30) in an annular shape. The elastic body portion (20) includes a dust lip (21) and a seal lip (22). The seal lip (22) includes a lip contact surface (24) that is a surface in a tubular shape formed to be able to contact the shaft. The conductive fabric (30) includes an inner periphery side contact portion (31) in an annular shape formed to be able to contact the shaft, and an outer periphery side contact portion (32) in an annular shape that is formed to be able to contact the outer periphery side member. The conductive grease (G) is provided to be present on at least a part of the lip contact surface (24) and at least a part of the seal lip (22) and in a space (S) between lips.

## Description

### Technical Field

The present invention relates to a sealing device, and particularly relates to a sealing device used for a shaft.

### Background Art

In recent years, electrification of automobiles has progressed, and development of electric automobiles such as EVs (Electric Vehicles) and HVs (Hybrid Vehicles) is progressing. In these electric automobiles, drive motors are used as power sources, and induced currents generated in the drive motors become electromagnetic noise and may affect AM radio.

Thus, there is known a vehicle power transmission device in which a conduction path for grounding is formed between a shaft to be driven via a conductive brush of a metal and a casing to discharge a leak current from the drive motor that becomes a cause of radio frequency noise to the casing via the conduction path by the conductive brush (for example, see Patent Literature 1).

However, since in the vehicle power transmission device as described above, metal powder is generated by sliding between the shaft and the conductive brush, it is necessary to provide a cover for scattering prevention to prevent scattering of the metal powder generated from the conductive brush, and it is necessary to ensure an installation space for the cover.

On the other hand, in order to save space, there is proposed an electromagnetic noise suppression device in which an oil seal that seals a space between a through-hole of a housing grounded to a vehicle body and a rotating shaft of an electric motor is formed of a conductive rubber, and by causing the housing and the rotating shaft to electrically continue via the conductive rubber, electromagnetic noise induced to the rotating shaft is released to the housing of a metal (for example, see Patent Literature 2).

Furthermore, as a sealing device for a hub bearing, there is a bearing seal that uses a seal lip member made of a rubber material containing conductive carbon to take measures against electrical noise (for example, see

### Patent Literature 3).

### Document List

### Patent Literatures

Patent Literature 1: Japanese Patent Application Publication No. 2015-207534
Patent Literature 2: Japanese Patent Application Publication No. 2000-244180
Patent Literature 3: Japanese Patent Application Publication No. 2015-14296

### Summary of Invention

### Technical Problem

In the electromagnetic noise suppression device of the sort disclosed in Patent Literature 2, space saving is achieved, but, for example, when the rotating shaft is eccentric, or when the conductive oil seal has been used for a long time period and a loss of springiness occurs to a lip tip end portion that contacts the rotating shaft, the conductive oil seal and the rotating shaft are separated. Thereby, sealing performance may be reduced, or it may be impossible to release electrical noise to the housing sufficiently.

Furthermore, in the sealing device disclosed in Patent Literature 3 described above, it is possible to suppress occurrence of electrical noise, but since the conductive lip portion is in contact with a hub wheel, sliding resistance increases.

In addition, further improvement in conductive performance is required for the conventional seals having a configuration intended to suppress the influence of electrical noise as described above.

As above, in addition to further improvement in conductive performance, the configuration that can suppress deterioration of the sealing performance, and can reduce the sliding resistance, without an influence of the usage conditions and usage time on the conductive performance has been required for the conventional seals having the configuration intended to suppress the influence of electrical noise.

The present invention is made in the light of the aforementioned problem, and it is an object of the present invention to provide a sealing device that can suppress conductive performance from being influenced by usage states and usage time, can suppress deterioration of sealing performance, can reduce sliding resistance, and can further improve the conductive performance.

### Solution to Problem

In order to attain the above-described object, a sealing device according to the present invention is a sealing device that seals a space in an annular shape between a shaft and an outer periphery side member, characterized by including a reinforcing ring in an annular shape around an axis, an elastic body portion attached to the reinforcing ring and formed of a conductive elastic body in an annular shape around the axis, a conductive grease, and a conductive fabric in an annular shape around the axis, and characterized in that the elastic body portion includes a dust lip that extends toward the axis and is in an annular shape around the axis, a seal lip that is provided inward from the dust lip, extends toward the axis and is in an annular shape around the axis, and a gasket portion formed to be able to contact the outer periphery side member, the seal lip includes a lip contact surface that is a surface in a tubular surface shape formed to be able to contact the shaft and extending along the axis, the conductive fabric includes an inner periphery side contact portion that is a portion formed to be able to contact the shaft and is in an annular shape around the axis, and an outer periphery side contact portion that is a portion formed to be able to contact the outer periphery side member and is in an annular shape around the axis, and the conductive grease is provided to be present on at least a part of the lip contact surface and in at least a part of a space between lips that is a space in an annular shape between the seal lip and the dust lip.

The sealing device according to one aspect of the present invention, wherein at least one groove in an annular shape around the axis is formed in the lip contact surface.

The sealing device according to one aspect of the present invention, wherein the elastic body portion includes a straining force giving member that is an elastic member in an annular shape, and the straining force giving member is formed to give a straining force that presses the lip contact surface against the shaft, in the seal lip.

The sealing device according to one aspect of the present invention, wherein the inner periphery side contact portion of the conductive fabric is formed into a tubular shape extending in the axis direction.

The sealing device according to one aspect of the present invention, wherein the conductive fabric is attached to the elastic body portion on an outer side from the dust lip.

### Effects of Invention

According to a sealing device of the present invention, it is possible to suppress the conductive performance from being affected by the usage conditions and the usage time, suppress reduction in sealing performance, reduce sliding resistance and achieve further improvement in the conductive performance.

### Brief Description of Drawings

[Fig. 1] Fig. 1 is a sectional view in a section along an axis illustrating a schematic configuration of a sealing device according to an embodiment of the present invention.
[Fig. 2] Fig. 2 is a partially enlarged sectional view enlarging and illustrating one side of the section of the sealing device illustrated in Fig. 1 by enlarging the one side.
[Fig. 3] Fig. 3 is a partially enlarged sectional view enlarging and illustrating a space between lips of an elastic body portion in the sealing device illustrated in Fig. 1.
[Fig. 4] Fig. 4 is a partially enlarged sectional view illustrating a usage state of the sealing device illustrated in Fig. 1.

### Description of Embodiments

Hereinafter, an embodiment of the present invention will be described with reference to the accompanying drawings.

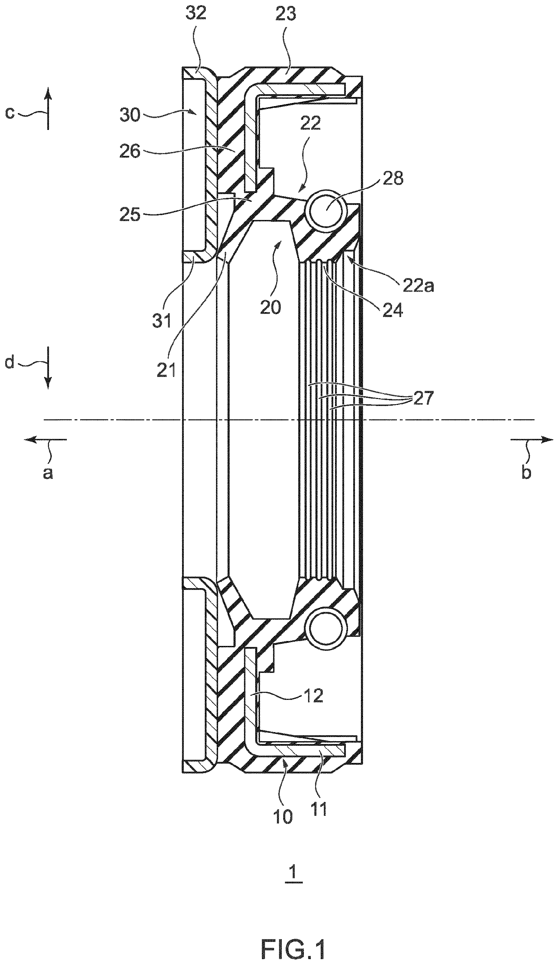

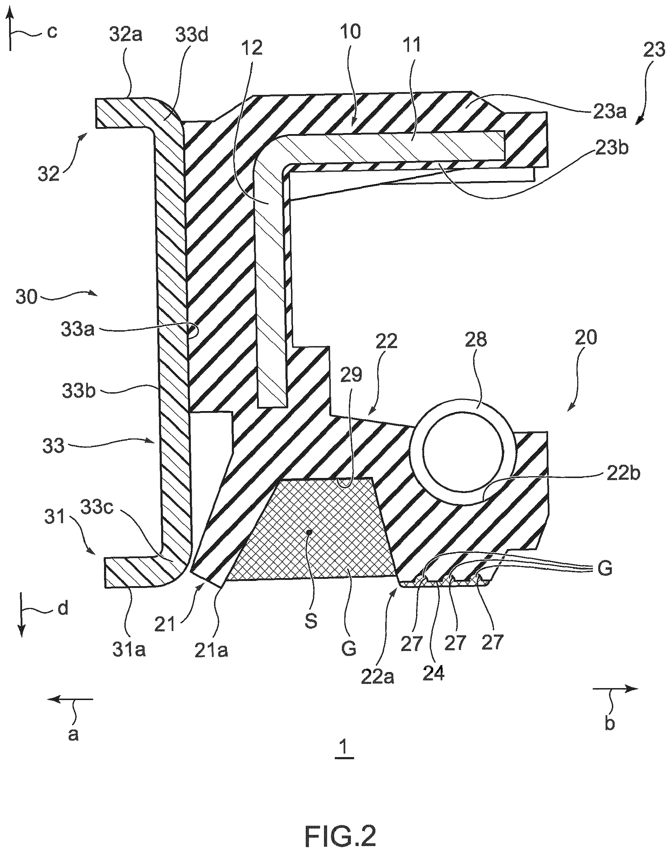

Fig. 1 is a sectional view in a section along an axis x, illustrating a configuration of a sealing device 1 according to the embodiment of the present invention. Fig. 2 is a partially enlarged sectional view illustrating the configuration of the sealing device 1 according to the embodiment of the present invention. In Fig. 2, one side (upper side) of the section of the sealing device 1 illustrated in Fig. 1 is illustrated. Hereinafter, for convenience of explanation, in the axis x, an arrow "a" direction is referred to as an outside, and an arrow "b" direction is referred to as an inside. The outside is an atmosphere side where foreign matter such as dust, sand, or muddy water is present, and the inside is a space to be sealed side on an opposite side to the atmosphere side. Further, in a direction perpendicular to the axis x (Hereinafter, also referred to as "a radial direction".), a direction to be away from the axis x is referred to as an outer periphery side, (arrow "c" direction), and a direction toward the axis x is referred to as an inner periphery side (arrow "d" direction).

The sealing device 1 according to the embodiment of the present invention is for sealing a space in an annular shape between a shaft as an inner periphery side member not illustrated and an outer periphery side member. The sealing device 1 is used in a motor drive device of an electric automobile as described later, for example. In this case, the shaft is an output shaft of an electric motor, and the outer periphery side member is a casing having a through-hole through which the output shaft of the electric motor penetrates by the electric motor being accommodated. Note that the inner periphery side member may be a member that reciprocates along the axis. Further, an object to be sealed by the sealing device 1 is not limited to the motor drive device for an electric automobile. The sealing device 1 can also be used in various other motor drive devices such as a motor drive unit of an in-wheel motor, a motor drive device of a hybrid automobile, a motor drive device of an electric motorcycle, and a motor drive device of an electric bicycle, for example.

As shown in Figs. 1 and 2, the sealing device 1 includes a reinforcing ring 10 in an annular shape around the axis x; an elastic body portion 20 attached to the reinforcing ring 10 and formed of a conductive elastic body in an annular shape around the axis x; a conductive grease G; and a conductive fabric 30 in an annular shape around the axis x. Note that in Fig. 1, illustration of the conductive grease G is omitted. The elastic body portion 20 has a dust lip 21 that extends toward the axis x and is in an annular shape around the axis x, a seal lip 22 that is provided inward (arrow "b" direction side) from the dust lip 21, extends toward the axis x, and is in an annular shape around the axis x, and a gasket portion 23. The gasket portion 23 is formed to be able to contact the outer periphery side member in a usage state (Hereinafter, also simply referred to as a "usage state".) described later in which the sealing device 1 is attached to a space between the shaft and the outer periphery side member. The seal lip 22 has a lip contact surface 24 that is formed to be able to contact the shaft in the usage state described later and is a surface in a tubular shape extending along the axis x. The conductive fabric 30 has an inner periphery side contact portion 31 that is formed to be able to contact the shaft in the usage state described later and is a portion in an annular shape around the axis x, and an outer periphery side contact portion 32 that is formed to be able to contact the outer periphery side member in the usage state described later and is a portion in an annular shape around the axis x. The conductive grease G is provided to be present on at least a part of the lip contact surface 24 and in at least a part of a space S between lips that is a space in an annular shape between the seal lip 22 and the dust lip 21. Hereinafter, the configuration of the sealing device 1 will be specifically described.

As illustrated in Figs. 1 and 2, the reinforcing ring 10 is a member of a metal in an annular shape centered or substantially centered about the axis x, and a shape of a section along the axis x (Hereinafter, also simply referred to as a "section".) presents a shape in an L-shape or substantially L-shape. The reinforcing ring 10 has, for example, a cylindrical portion 11 that is a part in a cylindrical shape or a substantially cylindrical shape extending in an axis x direction, and a disk portion 12 that is a part in a hollow disk shape extending from an end portion of the outside (arrow "a" direction side) of the cylindrical portion 11 to an inner periphery side (arrow "d" direction side). The cylindrical portion 11 is formed so that the sealing device 1 is fittable to an inner peripheral surface of a through-hole formed in the outer periphery side member not illustrated and contacts the inner peripheral surface of the through-hole via a portion of the elastic body portion 20 to be fittable to the inner peripheral surface. The cylindrical portion 11 may be in a shape having a cone ring portion forming a step at a halfway portion in the axis x direction of the cylindrical portion 11, or a part of the cylindrical portion 11 may directly contact the inner peripheral surface of the through-hole to be fittable to the inner peripheral surface in the usage state.

As shown in Figs. 1 and 2, the elastic body portion 20 is attached to the reinforcing ring 10 and is formed integrally with the reinforcing ring 10 to cover the entire reinforcing ring 10 in the present embodiment. As described above, the elastic body portion 20 has the dust lip 21, the seal lip 22 provided inward from the dust lip 21, and the gasket portion 23. Further, the elastic body portion 20 has a lip waist portion 25 in an annular shape, and a cover portion 26. The lip waist portion 25 is a portion located in a vicinity of an end portion on an inner periphery side of the disk portion 12 in the reinforcing ring 10. The cover portion 26 is a portion attached to the disk portion 12 from the outside and inside between the lip waist portion 25 and the gasket portion 23.

The dust lip 21 extends obliquely toward the axis x to the outside from the lip waist portion 25 and has a shape in which a diameter reduces as progress toward the outside. A dust lip tip end portion 21a that is a portion at a tip end of the dust lip 21 is formed to contact a surface on an outer periphery side of the shaft so that the shaft is slidable in the usage state of the sealing device 1.

The seal lip 22 is located inward from the dust lip 21, and extends inward from the lip waist portion 25 along the axis x. Further, a seal lip tip end portion 22a that is a portion at a tip end of the seal lip 22 is a portion in an annular shape protruded toward the inner periphery side. A sectional shape of the seal lip tip end portion 22a is a substantially rectangular or substantially trapezoidal shape as shown in Fig. 2, for example. The seal lip tip end portion 22a is formed to contact an outer peripheral surface of the shaft so that the shaft is slidable in the usage state of the sealing device 1. Specifically, as shown in Fig. 2, the seal lip tip end portion 22a has the lip contact surface 24 that is a surface in a tubular shape on the inner periphery side, and the seal lip tip end portion 22a is formed to contact the outer peripheral surface of the shaft so that the shaft is slidable in the lip contact surface 24 in the usage state.

The lip contact surface 24 is a surface in a tubular shape. For example, as illustrated in Fig. 2, the lip contact surface 24 is a cylindrical surface or substantially cylindrical surface centered or substantially centered about the axis x. In the lip contact surface 24, at least one groove 27 in an annular shape around the axis x is formed. In the present embodiment, three grooves 27 are formed as illustrated in Figs. 1 and 2. The groove 27 is a groove in an endless annular shape and is a groove extending in a circular-ring shape or substantially circular-ring shape centered or substantially centered about the axis x, for example. Further, the groove 27 is a groove forming a space recessed to the outer periphery side from the lip contact surface 24. The number of grooves 27 formed in the lip contact surface 24 is not limited to the above-described number. Further, the shape of the groove 27 is not limited to the aforementioned shape. The groove 27 may be a groove formed by one or a plurality of arc-shaped grooves. For example, the groove 27 may be formed by a plurality of arc-shaped grooves being spaced and arranged in an annular form.

Further, the elastic body portion 20 has a straining force giving member 28 that is an elastic member in an annular shape. The straining force giving member 28 is formed to give a straining force that presses the lip contact surface 24 to the shaft in the seal lip 22 in the usage state. The straining force giving member 28 is specifically a garter spring 28, and the garter spring 28 is fitted in a recessed part 22b formed in the seal lip 22. The recessed part 22b is a portion recessed toward the inner periphery side and is provided at a position on the outer periphery side in which a back of the recessed part 22b faces the seal lip tip end portion 22a in the seal lip 22. The garter spring 28 is a coiled spring member of a metal, for example, pushes the seal lip tip end portion 22a in a direction toward the axis x, and gives the seal lip tip end portion 22a a straining force of a predetermined magnitude to the shaft so that the lip contact surface 24 of the seal lip tip end portion 22a follows the outer peripheral surface of the shaft with respect to a displacement of the shaft. Note that the garter spring 28 may be formed of various other materials such as a resin without being limited to a metal.

The gasket portion 23 is attached to the cylindrical portion 11 so as to enclose the cylindrical portion 11 of the reinforcing ring 10 from the outer periphery side and the inner periphery side, and has an outer periphery side gasket portion 23a that is a part covering the cylindrical portion 11 from the outer periphery side, and an inner periphery side gasket portion 23b that is a part covering the cylindrical portion 11 from the inner periphery side. A thickness in a radial direction of the outer periphery side gasket portion 23a is set so that when the sealing device 1 is press fitted in a surface (through-hole) on an inner periphery side of the outer periphery side member, the outer periphery side gasket portion 23a is compressed in the radial direction between the through-hole and the cylindrical portion 11 of the reinforcing ring 10, and a fitting force, which is a force directed in the radial direction, of a predetermined magnitude is generated. The cylindrical portion 11 of the reinforcing ring 10 and the gasket portion 23 of the elastic body portion 20 are respectively formed so that alignment of the axis x of the sealing device 1 and the axis of the shaft is achieved, when the sealing device 1 is fitted into the through-hole of the outer periphery side member.

As the conductive elastic body of the elastic body portion 20, there is a conductive rubber containing a conductive filler such as carbon black particles or metal powder, for example. The conductive rubber like this contains the conductive filler and includes relatively low electric resistance. A volume electric resistivity of the conductive rubber is, for example, 10⁸ Ω·cm or less. More specifically, the conductive rubber is formed by desired amounts of each of an arbitrary rubber material, conductive particles, and conductive fibers being mixed together. As the rubber material, there is cited, for example, a synthetic rubber such as nitrile rubber (NBR), hydrogenated nitrile rubber (H-NBR), acrylic rubber (ACM), fluorine rubber (FKM), or silicone rubber. As the conductive particles, it is also possible to use graphite, or a conductive metal oxide such as indium/tin oxide, or antimony/tin oxide, besides carbon black. Further, these materials may be properly selected and used. As the conductive fibers, there are stainless steel fibers, carbon fibers (carbon fibers, carbon tubes), or conductive fibers plated on potassium titanate. Further, a thickness and a length of the conductive fiber are arbitrarily selectable.

As the metal material of the reinforcing ring 10, there is, for example, stainless steel, or SPCC (cold rolled steel sheet). The reinforcing ring 10 is produced by pressing or forging, for example, and the elastic body portion 20 is molded by cross-linking (vulcanization) molding by using a mold. At a time of the cross-linking molding, the reinforcing ring 10 is arranged in the mold, the elastic body portion 20 is bonded to the reinforcing ring 10 by cross-linking bonding, and the elastic body portion 20 and the reinforcing ring 10 are integrally formed.

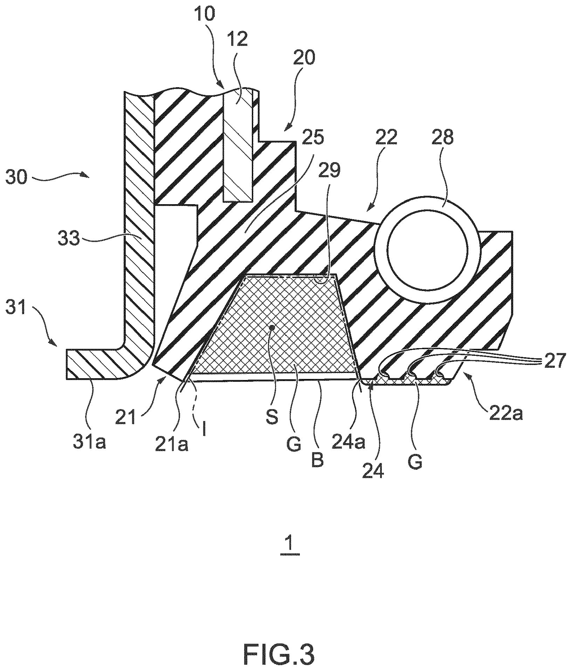

Further, as described above, the conductive grease G is provided in the sealing device 1, and the conductive grease G is provided so as to be present on at least a part of the lip contact surface 24 and in at least a part of the space S between lips that is the space in an annular shape between the seal lip 22 and the dust lip 21. For example, as illustrated in Fig. 3, the conductive grease G is applied to a bottom surface 29 forming the space S between lips. The bottom surface 29 is a surface extending along an imaginary line I illustrated in Fig. 3, and is a surface formed of respective surfaces facing the inner periphery side, of the seal lip 22, the lip waist portion 25, and the dust lip 21. The bottom surface 29 is specifically a surface extending between an end (outside end 24a) outside of the lip contact surface 24 of the seal lip tip end portion 22a, and the dust lip tip end portion 21a of the dust lip 21 and facing the inner periphery side. As illustrated in Fig. 3, the bottom surface 29 is a surface recessed to the outer periphery side. The space S between lips is a space in an annular shape which the bottom surface 29 surrounds, and a boundary B on the inner periphery side is a conical surface or a cylindrical surface that extends between the outside end 24a of the lip contact surface 24 and the dust lip tip end portion 21a of the dust lip 21.

The conductive grease G is applied to the bottom surface 29 to fill at least a part of the space S between lips and is provided so as not to completely fill the space S between lips as in an example illustrated in Fig. 3, for example. The conductive grease G may be provided to fill a part of the space S between lips as described above, may be provided to completely fill the space S between lips, or may be provided to overflow from the space S between lips. Further, the conductive grease G may be provided to protrude from the space S between lips.

Further, the conductive grease G is also applied to a part of the lip contact surface 24 of the seal lip 22. For example, as shown in Fig 3, the conductive grease G is applied to a whole of the lip contact surface 24. The conductive grease G is applied to fill insides of the grooves 27. The conductive grease G may be provided to cover a part of the lip contact surface 24 as described above, may be provided to cover the entire lip contact surface 24, or may be provided to protrude from the lip contact surface 24.

The conductive grease G may be any grease as long as it is a grease containing a conductive substance. A base oil used in the conductive grease G is not particularly limited, and it is possible to use all oils used as base oils of lubricants. Further, the conductive substance can be a substance having conductivity, and the substance having conductivity is not particularly limited. As the conductive substance, a substance having good conductivity is preferable. Further, the conductive substance may be a liquid or solid. The conductive substance is, for example, carbon black. The volume electric resistivity of the conductive grease G is, for example, 10⁸ Ω·cm or less.

Further, as described above, the sealing device 1 has the conductive fabric 30. The conductive fabric 30 is a member formed of conductive fibers, and is a member formed of woven fabric or nonwoven fabric of conductive fibers, for example. As the conductive fibers, there are, for example, stainless steel fibers, carbon fibers (carbon fibers, carbon tubes), or conductive fibers plated on potassium titanate. The conductive fabric 30 has the inner periphery side contact portion 31 formed to be able to contact the shaft so that the shaft is slidable in the usage state, and the outer periphery side contact portion 32 formed to be able to contact the outer periphery side member.

The conductive fabric 30 specifically has a hollow disk shape as shown in Figs. 1 and 2 and has a disk portion 33 that is a portion extending between the inner periphery side contact portion 31 and the outer periphery side contact portion 32, for example. The disk portion 33 is a portion having a circular-ring shape extending in a flat plate shape or a substantially flat plate shape in the radial direction and has an inside surface 33a and an outside surface 33b that is a pair of surfaces each in a circular-ring shape with mutual backs facing each other. The inner periphery side contact portion 31 extends tubularly from the outside surface 33b in an end portion (inner periphery end portion 33c) on the inner periphery side of the disk portion 33, and the outer periphery side contact portion 32 extends tubularly from the outside surface 33b in an end portion (outer periphery end portion 33d) on the outer periphery side of the disk portion 33.

The inner periphery side contact portion 31 is formed into a cylindrical shape or a substantially cylindrical shape centered or substantially centered about the axis x so as to form a flange portion in the inner periphery end portion 33c as shown in Fig. 2, for example. The inner periphery side contact portion 31 has a contact surface 31a that is a surface in an annular shape facing the inner periphery side, and the contact surface 31a is in a shape that can contact the shaft so that the shaft is slidable in the usage state. The contact surface 31a is a cylindrical surface or a substantially cylindrical surface centered or substantially centered about the axis x, for example. In this case, the contact surface 31a of the inner periphery side contact portion 31 is a surface in a cylindrical surface shape, so that a contact area with the shaft is large. Further, the inner periphery side contact portion 31 is formed into a flange shape, and therefore easily follows the outer peripheral surface of the shaft with respect to eccentricity of the shaft in the usage state.

The outer periphery side contact portion 32 is formed into a cylindrical shape or a substantially cylindrical shape centered or substantially centered about the axis x so as to form a flange portion in the outer periphery end portion 33d, as shown in Fig. 2, for example. The outer periphery side contact portion 32 has a contact surface 32a that is a surface in an annular shape facing the outer periphery side, and the contact surface 32a is in a shape that can contact the inner peripheral surface of the through-hole of the outer periphery side member in the usage state. The contact surface 32a is a cylindrical surface or a substantially cylindrical surface centered or substantially centered about the axis x, for example. In this case, the contact surface 32a of the outer periphery side contact portion 32 is the surface in a cylindrical surface shape, and therefore a contact area with the through-hole of the outer periphery side member is large.

The inner periphery side contact portion 31 may be in another shape as long as the inner periphery side contact portion 31 is in the shape that can contact the shaft in the usage state. Further, the outer periphery side contact portion 32 may be in another shape as long as the outer periphery side contact portion 32 is in a shape that can contact the outer periphery side member in the usage state. Further, the conductive fabric 30 may be formed to contact the shaft in the inner periphery end portion 33c of the disk portion 33, without having the inner periphery side contact portion 31. The conductive fabric 30 may be formed to contact the outer periphery side member in the outer periphery end portion 33d of the disk portion 33, without having the outer periphery side contact portion 32. Further, the conductive fabric 30 may be formed not to contact the outer periphery side member in the outer periphery end portion 33d of the disk portion 33, without having the outer periphery side contact portion 32.

The conductive fabric 30 is fixed to the elastic body portion 20 by bonding or the like. The conductive fabric 30 is attached to the elastic body portion 20 on an outside from the dust lip 21 and is fixed to the cover portion 26 of the elastic body portion 20, on the inside surface 33a of the disk portion 33, as shown in Figs. 1 and 2, for example. Therefore, in the sealing device 1, the inner periphery side contact portion 31 and the outer periphery side contact portion 32 of the conductive fabric 30 extend to the outside. Further, as described above, the conductive fabric 30 is fixed to the elastic body portion 20 so that the inner periphery side contact portion 31 and the outer periphery side contact portion 32 respectively contact the shaft and the outer periphery side member in the usage state. The inner periphery side contact portion 31 and the outer periphery side contact portion 32 are fixed to the elastic body portion 20 so as not to interfere with the elastic body portion 20. Since the conductive fabric 30 is fixed to the elastic body portion 20 in the cover portion 26, the contact area between the conductive fabric 30 and the elastic body portion 20 can be increased.

The inner periphery side contact portion 31 and the outer periphery side contact portion 32 may extend in different directions from each other concerning the disk portion 33, or the inner periphery side contact portion 31 and the outer periphery side contact portion 32 may both extend to the inside.

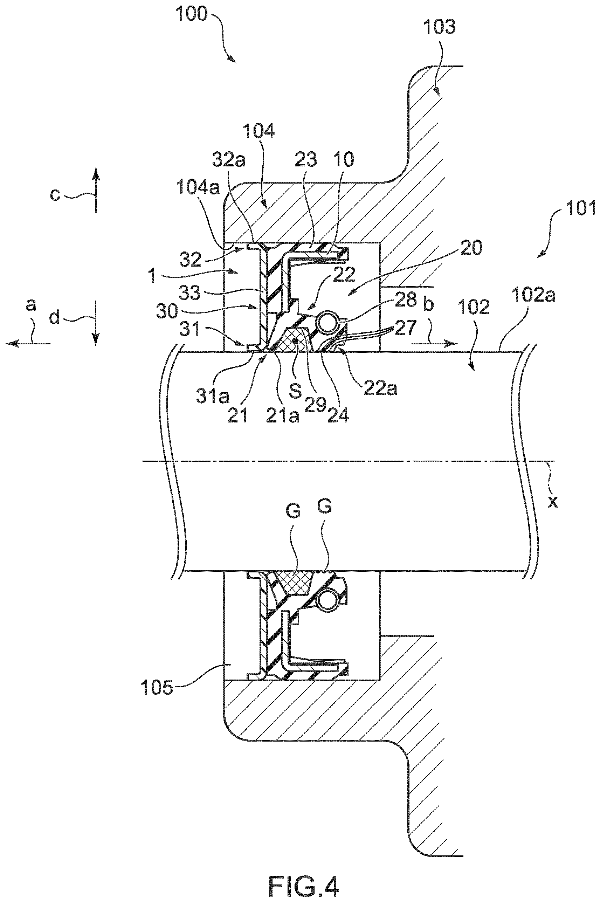

Next, an operation of the sealing device 1 having the aforementioned configuration is described. Fig. 4 is a partially enlarged sectional view of the sealing device 1 in the usage state. Fig. 4 illustrates one example of the usage state of the sealing device 1, and the sealing device 1 is in the usage state by being attached to the motor drive device 100 of an electric automobile. As illustrated in Fig. 4, the sealing device 1 is attached to between an output shaft 102 and an opening 104 to seal a gap in an annular shape between the output shaft 102 of an electric motor 101 and the opening 104 forming a through-hole 105 through which the output shaft 102 is inserted, in the usage state. The opening 104 is formed in a casing 103 of the motor drive device 100, the electric motor 101 is accommodated in the casing 103, and the output shaft 102 is supported by a bearing not illustrated.

A lubricant oil is sealed in the casing 103, the sealing device 1 is intended to prevent leak of the lubricant oil in the casing 103 to an outside and intended to prevent entry of foreign matter such as dust or sand, or muddy water from the outside.

As shown in Fig. 4, in the usage state, the sealing device 1 is attached by being press fitted in the opening 104 of the casing 103, and the gasket portion 23 of the elastic body portion 20 contacts an inner peripheral surface 104a of the opening 104 and is compressed between the opening 104 and the reinforcing ring 10. Thereby, a space between the sealing device 1 and the opening 104 of the casing 103 is sealed. Further, the seal lip tip end portion 22a of the seal lip 22 contacts the outer peripheral surface 102a of the output shaft 102 so that the output shaft 102 is slidable, in the lip contact surface 24, and the space between the sealing device 1 and the output shaft 102 is sealed.

In the usage state, the seal lip 22 and the dust lip 21 of the elastic body portion 20 respectively contact the outer peripheral surface 102a of the output shaft 102 in the lip contact surface 24 and the dust lip tip end portion 21a, and form the closed space (space S between lips) between the bottom surface 29 and the outer peripheral surface 102a of the output shaft 102. By this contact, the seal lip 22 and the dust lip 21 deform, the space S between lips deforms in the usage state, and in the usage state, a capacity of the space S between lips becomes smaller than a capacity of the space S between lips in the sealing device 1 in a free state that is not attached to the motor drive device 100. Note that in the usage state, both the seal lip 22 and the dust lip 21 may be made non-deformable, or either one may be made non-deformable.

As described above, the lip contact surface 24 forms a surface in an annular shape and is the surface in a cylindrical surface or substantially cylindrical surface shape extending along the axis x. Therefore, the lip contact surface 24 is in contact with the outer peripheral surface 102a of the output shaft 102 with a large width in the axis x direction. Further, the lip contact surface 24 is given a straining force by the garter spring 28 to the output shaft 102. Therefore, even when the output shaft 102 becomes eccentric, the lip contact surface 24 follows the outer peripheral surface 102a of the output shaft 102 by the garter spring 28 and maintains the large contact surface.

As described above, the conductive grease G is applied to the bottom surface 29 of the sealing device 1 to fill a part of the space S between lips, and in the usage state, at least a part of the bottom surface 29 and a part of the outer peripheral surface 102a of the output shaft 102 are connected via the conductive grease G. The conductive grease G may be applied to the bottom surface 29 of the sealing device 1 so that the conductive grease G fills the space S between lips of the sealing device 1 in the usage state. In the example in Fig. 4, in the sealing device 1 in the usage state, the space S between lips is filled with the conductive grease G.

Note that it is preferable that an amount of the conductive grease G to be applied to the bottom surface 29 of the sealing device 1 is set so that a volume of the conductive grease G does not become larger than a capacity of the space S between lips as a result that the conductive grease G expands in the usage state. This is to prevent the volume of the conductive grease G from becoming larger than the capacity of the space S between lips as a result that the conductive grease G expands, in the usage state. Thereby, the seal lip 22 is prevented from rising, and contact between the lip contact surface 24 and the outer peripheral surface 102a of the output shaft 102 is prevented from being released. Further, likewise, contact of the dust lip 21 with the outer peripheral surface 102a of the output shaft 102 is prevented from being released. Therefore, it is preferable that in the sealing device 1 in the free state, the amount of the conductive grease G to be applied to the bottom surface 29 is an amount that does not completely fill the space S between lips.

Further, as described above, in the sealing device 1 in the free state, the conductive grease G is also applied to the lip contact surface 24 of the seal lip 22, and therefore, the conductive grease G is interposed between the lip contact surface 24 of the seal lip 22 and the outer peripheral surface 102a of the output shaft 102 in the usage state. In the example in Fig. 4, the conductive grease G is interposed between an entire surface of the lip contact surface 24 of the seal lip 22 and the outer peripheral surface 102a of the output shaft 102. Therefore, in the sealing device 1 in the free state, the conductive grease G is applied to the entire surface or a substantially entire surface of the lip contact surface 24 of the seal lip 22. Note that in the usage state, the conductive grease G may not be interposed between the entire surface of the lip contact surface 24 and the outer peripheral surface 102a of the output shaft 102, but may be interposed between a part of the lip contact surface 24 and the outer peripheral surface 102a of the output shaft 102. Accordingly, in the sealing device 1 in the free state, the conductive grease G may not be applied to the entire surface of the lip contact surface 24 of the seal lip 22.

Further, as shown in Fig. 4, in the usage state, the conductive grease G is also present in the grooves 27 in the lip contact surface 24. In the example in Fig. 4, the conductive grease G is present in a whole of an inside of each of the grooves 27 of the lip contact surface 24. The conductive grease G may not be present in the whole of the inside of each of the grooves 27 of the lip contact surface 24.

Further, in the usage state, the inner periphery side contact portion 31 of the conductive fabric 30 is in contact with the outer peripheral surface 102a of the output shaft 102 in the contact surface 31a in a cylindrical surface or substantially cylindrical surface shape, and the outer periphery side contact portion 32 of the conductive fabric 30 is in contact with the inner peripheral surface 104a of the opening 104 of the casing 103 in the contact surface 32a in a cylindrical surface or substantially cylindrical surface shape.

As described above, in the usage state, the sealing device 1 electrically connects the output shaft 102 and the casing 103 via the elastic body portion 20 formed of a conductive rubber, and can ensure electric continuity between the output shaft 102 and the casing 103 via the elastic body portion 20. In this way, the elastic body portion 20 forms a conductive path that electrically connects the output shaft 102 and the casing 103 in the usage state. Therefore, it is possible to suppress occurrence of noise by discharging a leak current generated in the electric motor 101 from the output shaft 102 to the casing 103.

Further, as described above, the lip contact surface 24 of the seal lip 22 is a surface in a cylindrical shape or substantially cylindrical shape extending along the axis x, and therefore, the lip contact surface 24 is in contact with the output shaft 102 with a large width in the axis x direction. Therefore, the lip contact surface 24 can improve the conductivity of the conductive path which the elastic body portion 20 forms. Thereby, it is possible to increase an amount of discharge of the leak current generated in the electric motor 101 to the casing 103 from the output shaft 102, and it is possible to further suppress occurrence of noise.

Further, by the straining force of the garter spring 28, the lip contact surface 24 follows the output shaft 102, and it is possible to maintain a posture of the lip contact surface 24 to the outer peripheral surface 102a of the output shaft 102. Therefore, even when the output shaft 102 becomes eccentric or the like, it is possible to suppress reduction in the contact area of the lip contact surface 24 to the outer peripheral surface 102a of the output shaft 102. Thereby, it is possible to stably maintain the large contact area of the lip contact surface 24 to the outer peripheral surface 102a of the output shaft 102 in the usage state, it is possible to stably maintain conductivity of the conductive path which the elastic body portion 20 forms, and it is possible to stably suppress occurrence of noise.

Further, as described above, in the usage state, the sealing device 1 electrically connects the output shaft 102 and the casing 103 via the conductive fabric 30, and can ensure electric continuity between the output shaft 102 and the casing 103 via the conductive fabric 30. In this way, the conductive fabric 30 forms the conductive path that electrically connects the output shaft 102 and the casing 103 in the usage state. Therefore, it is also possible to discharge the leak current generated in the electric motor 101 to the casing 103 from the output shaft 102 by the conductive fabric 30, in addition to the elastic body portion 20, and it is possible to further suppress occurrence of noise.

In this way, the sealing device 1 has the conductive path which the conductive fabric 30 forms in addition to the conductive path which the elastic body portion 20 forms. Therefore, it is possible to increase an electric continuity amount between the output shaft 102 and the casing 103, and it is possible to improve conductivity of the sealing device 1. Thereby, it is possible to increase the amount of discharge of the leak current generated in the electric motor 101 to the casing 103 from the output shaft 102, and it is possible to further suppress occurrence of noise.

Further, when the contact area between the inner periphery side contact portion 31 of the conductive fabric 30 and the outer peripheral surface 102a of the output shaft 102 decreases due to eccentricity or the like of the output shaft 102, or when the contact area between the inner periphery side contact portion 31 and the outer peripheral surface 102a of the output shaft 102 decreases due to deformation of the conductive fabric 30 by use, the conductivity of the conductive path which the conductive fabric 30 forms reduces. However, the sealing device 1 has the conductive path which the elastic body portion 20 forms, can maintain conductivity as the entire sealing device 1, and can maintain an operation of suppression of occurrence of noise regardless of the usage conditions and usage time.

Further, the inner periphery side contact portion 31 of the conductive fabric 30 is formed into a flange shape, and therefore easily follows the outer peripheral surface 102a of the output shaft 102 with respect to eccentricity of the output shaft 102 in the usage state. Further, the contact surface 31a of the inner periphery side contact portion 31 of the conductive fabric 30 is the surface in a cylindrical surface or substantially cylindrical surface shape, and therefore, the contact area with the outer peripheral surface 102a of the output shaft 102 is large. Further, the contact surface 32a of the outer periphery side contact portion 32 is a surface in a cylindrical surface or substantially cylindrical surface shape, and therefore, the contact area with the inner peripheral surface 104a of the opening 104 is large. Further, the conductive fabric 30 is fixed to the elastic body portion 20 in the cover portion 26, and therefore, the contact area between the conductive fabric 30 and the elastic body portion 20 is large. Consequently, the conductive fabric 30 can increase the electric continuity amount, can effectively suppress occurrence of noise, can stably maintain conductivity regardless of the usage conditions, and can stably maintain an operation of suppression of occurrence of noise.

Further, in the sealing device 1, the conductive grease G is provided in the space S and the lip contact surface 24 of the seal lip 22, and the conductive grease G, in the usage state, is interposed between the elastic body portion 20 and the output shaft 102. By the conductive grease G that is interposed, it is possible to reduce electric resistance between the output shaft 102 and the casing 103, and reduce occurrence of noise more.

Further, in the sealing device 1, the two lips of the seal lip 22 and the dust lip 21 are included, and the conductive grease G is provided in the lip contact surface 24 and the space S between lips, so that it is possible to reduce sliding resistance more by lubrication of the grease, and it is possible to suppress increase in sliding resistance due to increase in the number of lips.

Further, the lip contact surface 24 of the seal lip 22 has a large contact area and is given a straining force by the garter spring 28, and it is feared that the sliding resistance by the seal lip 22 increases, but since the grooves 27 are formed in the lip contact surface 24, as described above, it is possible to reduce the contact area of the lip contact surface 24 while ensuring the width in the axis x direction of the lip contact surface 24 so that the lip contact surface 24 maintains a stable posture. Therefore, it is possible to suppress increase in sliding resistance by the seal lip 22. Further, in the usage state, it is possible to hold the conductive grease G in the grooves 27, reduce the sliding resistance by lubrication of the grease, and suppress increase in sliding resistance by the seal lip 22.

The lip contact surface 24 has a surface in an annular shape facing the outer peripheral surface 102a of the output shaft 102 as described above. Therefore, according to the sealing device 1, there is little deformation of the seal lip tip end portion 22a in the state of contacting the outer peripheral surface 102a of the output shaft 102, unlike the conventional sealing device having a lip tip end portion that is wedge-shaped in section, for example. In other words, the seal lip 22 of the sealing device 1 is excellent in durability and can increase the contact area with the output shaft 102 in addition.

Further, since the sealing device 1 itself has conductivity as described above, it is not necessary to prepare a metallic brush or the like separately to ensure electric continuity between the output shaft 102 and the casing 103, and it is possible to simplify the configuration of the motor drive device 100 and save the space of the motor drive device 100.

Further, in the sealing device 1, it is possible to press the lip contact surface 24 firmly against the outer peripheral surface 102a of the output shaft 102 by the straining force of the garter spring 28 even at a time of the rubber of the elastic body portion 20 being hardened under a low temperature environment of 0°C or lower, for example, so that it is possible to maintain the electric continuity state of the output shaft 102 and the casing 103 and reduce occurrence of noise stably even under the low temperature environment.

Further, in the sealing device 1, the contact area of the lip contact surface 24 of the seal lip tip end portion 22a and the outer peripheral surface 102a of the output shaft 102 may partially decrease at a time of loss of springiness or at a time of wear of the seal lip 22 of the elastic body portion 20 after use for long time. Even in such a case, in the sealing device 1, the posture of the lip contact surface 24 of the elastic body portion 20 to the outer peripheral surface 102a of the output shaft 102 is stable by the straining force of the garter spring 28, and the lip contact surface 24 of the seal lip 22 can be maintained in the state of being firmly pressed against the outer peripheral surface 102a of the output shaft 102, so that it is possible to maintain the electric continuity state of the output shaft 102 and the casing 103 and reduce occurrence of noise stably, regardless of usage time.

As described above, according to the sealing device 1 according to the embodiment of the present invention, it is possible to suppress the conductive performance from being affected by the usage conditions and usage time, suppress reduction in sealing performance, reduce the sliding resistance, and further improve the conductive performance.

The sealing device 1 according to the embodiment of the present invention has been described thus far, but the sealing device according to the present invention is not limited to the aforementioned sealing device 1 and includes all modes that are included in the idea and the claims of the present invention. Further, the respective configurations may be combined properly and selectively so as to solve or exhibit at least part of the aforementioned problems and effects. For example, the shapes, materials, arrangements, sizes and the like of the various components in the above-described embodiments can be properly changed according to a specific mode of use of the present invention.

### List of Reference Signs

- 1: sealing device
- 10: reinforcing ring
- 11: cylindrical portion
- 12: disk portion
- 20: elastic body portion
- 21: dust lip
- 21a: dust lip tip end portion
- 22: seal lip
- 22a: seal lip tip end portion
- 22b: recessed part
- 23: gasket portion
- 23a: outer periphery side gasket portion
- 23b: inner periphery side gasket portion
- 24: lip contact surface
- 24a: outside end
- 25: lip waist portion
- 26: cover portion
- 27: groove
- 28: garter spring (straining force giving member)
- 29: bottom surface
- 30: conductive fabric
- 31: inner periphery side contact portion
- 31a: contact surface
- 32: outer periphery side contact portion
- 32a: contact surface
- 33: disk portion
- 33a: inside surface
- 33b: outside surface
- 33c: inner periphery end portion
- 33d: outer periphery end portion
- 100: motor drive device
- 101: electric motor
- 102: output shaft
- 102a: outer peripheral surface
- 103: casing
- 104: opening
- 104a: inner peripheral surface
- 105: through-hole
- B: boundary
- G: conductive grease
- S: space between lips
- x: axis

## Claims

1. A sealing device sealing a space in an annular shape between a shaft and an outer periphery side member, **characterized by** comprising:
a reinforcing ring in an annular shape around an axis;
an elastic body portion attached to the reinforcing ring and formed of a conductive elastic body in an annular shape around the axis;
a conductive grease; and
a conductive fabric in an annular shape around the axis, and **characterized in that**
the elastic body portion includes a dust lip that extends toward the axis and is in an annular shape around the axis, a seal lip that is provided inward from the dust lip, extends toward the axis, and is in an annular shape around the axis, and a gasket portion formed to be able to contact the outer periphery side member,
the seal lip includes a lip contact surface that is a surface in a tubular surface shape formed to be able to contact the shaft and extending along the axis,
the conductive fabric includes an inner periphery side contact portion that is a portion formed to be able to contact the shaft and is in an annular shape around the axis, and an outer periphery side contact portion that is a portion formed to be able to contact the outer periphery side member and is in an annular shape around the axis, and
the conductive grease is provided to be present on at least a part of the lip contact surface and in at least a part of a space between lips that is a space in an annular shape between the seal lip and the dust lip.

2. The sealing device according to claim 1, **characterized in that** at least one groove in an annular shape around the axis is formed in the lip contact surface.

3. The sealing device according to claim 1 or 2, **characterized in that** the elastic body portion includes a straining force giving member that is an elastic member in an annular shape, and
the straining force giving member is formed to give a straining force that presses the lip contact surface against the shaft in the seal lip.

4. The sealing device according to any one of claims 1 to 3, **characterized in that** the inner periphery side contact portion of the conductive fabric is formed into a tubular shape extending in the axis direction.

5. The sealing device according to any one of claims 1 to 4, **characterized in that** the conductive fabric is attached to the elastic body portion on an outer side from the dust lip.
